# EUROPÄISCHE PATENTANMELDUNG

(11) **EP 3 598 082 A1**
(43) Veröffentlichungstag der Anmeldung: **22.01.2020**
(21) Anmeldenummer: 18184810.2
(22) Anmeldetag: 20.07.2018
(51) Int. Cl.: G01F 23/284, G01F 23/292, G01F 23/296

(54) **MESSGERÄT MIT NAHFELDINTERAKTIONSEINRICHTUNG**

(71) Anmelder: VEGA Grieshaber KG, 77709 Wolfach (DE)
(72) Erfinder: WELLE, Roland, 77756 Hausach (DE); BÖRSIG, Jörg, 77776 Schapbach (DE); WÄLDE, Steffen, 78078 Niedereschach (DE)
(74) Vertreter: Maiwald Patent- und Rechtsanwaltsgesellschaft mbH

(57) **Zusammenfassung**

Die Erfindung betrifft Messgeräte oder Anzeigegeräte und ein Verfahren zum Betrieb von diesen Geräten, insbesondere Geräte zur Füllstandmessung, zur Grenzstandbestimmung, zur Erfassung der Topologie einer Füllgutoberfläche oder zur Anzeige der Messwerte dieser Geräte. Ein Messgerät oder Anzeigegerät weist eine RFID-Einheit auf. Dabei ist die RFID-Einheit eingerichtet, auf ein externes Kommando von einem externen Kommunikationsgerät mit einem Speicher Daten auszutauschen, einen steuerbaren Schalter ein- und auszuschalten, und/oder Energie an einen Energiespeicher zu übertragen.

## Beschreibung

### Gebiet der Erfindung

Die Erfindung betrifft Messgeräte oder Anzeigegeräte und ein Verfahren zum Betrieb dieser Geräte, insbesondere Geräte, beispielsweise Geräte, zur Füllstandmessung, zur Grenzstandbestimmung, zur Erfassung der Topologie einer Füllgutoberfläche oder zur Anzeige der Messwerte dieser Geräte. Beispiele für derartige Geräte sind ein Impedanzgrenzschalter, ein Vibrationsgrenzschalter, ein Füllstandmessgerät mit einem Hochfrequenzfrontend, Ultraschallfrontend oder Laserfrontend oder eine Anzeigevorrichtung, beispielsweise mit einem Niedrigenergie-Display. Weiter betrifft die Erfindung eine Verwendung, ein Programmelement und ein computerlesbares Medium.

### Hintergrund

Zur Füllstandmessung, beispielsweise in einem Behälter, werden verschiedene Arten von Sensorsystemen eingesetzt. Einige dieser Sensor- oder Anzeigesysteme sind mit einem Stromnetz verbunden, einige werden als autarke Geräte ausgeführt, d.h. diese Geräte werden unabhängig von einem Stromnetz eingesetzt und sind daher auf eine Batterie oder Ähnliches angewiesen. Einige Ausführungsformen sind verkapselt, z.B. aus Gründen des Korrosionsschutzes, so dass das Auswechseln der Batterie aufwändig sein kann. Es ist daher wichtig, diese Geräte energiesparend zu betreiben, und weiterhin, dass auf diese Geräte sowohl im einals auch im ausgeschalteten Zustand zugegriffen werden kann.

### Zusammenfassung der Erfindung

Es ist Aufgabe der Erfindung, eine Systemarchitektur und ein Verfahren bereitzustellen, mittels dessen batteriebetriebene Geräte möglichst energiesparend betrieben werden können und sowohl im ein- als auch im ausgeschalteten Zustand Zugriff möglich ist.

Diese Aufgabe wird durch den Gegenstand der unabhängigen Patentansprüche gelöst. Weiterbildungen der Erfindung ergeben sich aus den Unteransprüchen und der folgenden Beschreibung.

Ein Messgerät oder Anzeigegerät, insbesondere eine Messvorrichtung oder Anzeigevorrichtung für eine Füllstand-, Durchfluss- oder Druck-Messung, weist eine RFID-Einheit auf. Dabei ist die RFID-Einheit eingerichtet, auf ein externes Kommando von einem externen Kommunikationsgerät mit einem Speicher des Messgeräts oder Anzeigegeräts Daten auszutauschen, einen steuerbaren Schalter des Messgeräts oder Anzeigegeräts ein- und auszuschalten, und/oder Energie an einen Energiespeicher zu des Messgeräts oder Anzeigegeräts übertragen. Das Messgerät oder Anzeigegerät wird im Folgenden auch kurz als "Gerät" bezeichnet.

Das externe Kommunikationsgerät kann - als eine Art von vordefinierter Datenübertragung - ein Kommando an die RFID-Einheit des Geräts senden. Das Kommando kann insbesondere ein digital codiertes Kommando oder eine Bitfolge sein. Die Bitfolge kann insbesondere aus mindestens zwei sich unterscheidenden Bits bestehen. Die Bitfolge kann über RFID nach bekannten Verfahren übertragen werden. In einer Ausführungsform weist die RFID-Einheit eine RFID-Antenne und einen RFID-Schaltkreis auf. Die RFID-Antenne kann eine Spule sein, die z.B. auf einer Leiterbahn oder in einem Schaltkreis integriert ist. Der RFID-Schaltkreis kann so ausgelegt sein, dass er eine Vielzahl von Protokollen unterstützt, beispielsweise ein NFC-Protokoll (NFC: Near Field Communication) oder ein proprietäres Protokoll. Das proprietäre Protokoll kann eine Übermenge eines Standard-Protokolls sein. Im Falle einer Nahfeldkommunikationsverbindung kann die RFID-Einheit eine Verbindung verwenden, die mindestens sämtliche Protokollebenen der standardisierten Near Field Communication unterstützt. Die Nahfeldkommunikation ist ein Übertragungsstandard zum kontaktlosen Austausch von Daten per elektromagnetischer Induktion. Dieser unterstützt die Übertragung über kurze Strecken (d.h. wenige Zentimeter).

Das externe Kommunikationsgerät kann ein spezialisiertes Kommunikationsgerät sein, dessen Sende- und gegebenenfalls Empfangsverhalten auf das Gerät durch dessen spezifische Bauart abgestimmt ist. Das externe Kommunikationsgerät kann auch ein Smartphone oder ein Tablet sein, das in der Lage ist, mit der RFID-Einheit zu kommunizieren und das - z.B. mittels einer App - auf die Spezifika der RFID-Einheit und des Gerät abgestimmt ist.

Die RFID-Einheit gemäß einer Ausführungsform ist eingerichtet, mit dem Speicher des Geräts Daten auszutauschen. Es kann hier vorgesehen sein, das Beschreiben oder Auslesen des Gerätespeichers unter Zuhilfenahme eines Prozessors zu realisieren. Der Speicher kann - wenigstens teilweise - volatil oder nicht-volatil sein. Der Speicher wird beispielsweise für Parametrierdaten, für Steuerdaten, für Messdaten, für Zeitinformationen und weitere Arten von Daten verwendet werden. Es können also Daten zwischen dem externen Kommunikationsgerät und der RFID-Einheit ausgetauscht werden und zwischen der RFID-Einheit und dem Speicher des Geräts, und damit zwischen dem externen Kommunikationsgerät und dem Speicher des Geräts. Durch den Datenaustauch können relevante Daten - z.B. von der Art, wie oben spezifiziert - sowohl im Betrieb des Geräts als auch im ausgeschalteten Zustand ausgelesen (senden an die RFID-Einheit) und/oder geändert (empfangen von der RFID-Einheit) werden.

Das Gerät ist eingerichtet, gemäß einer Ausführungsform den steuerbaren Schalter ein- und auszuschalten. Dazu wirkt die RFID-Einheit über eine Steuerleitung auf den steuerbaren Schalter. Die Steuerleitung kann direkt auf den steuerbaren Schalter wirken oder indirekt, beispielsweise über eine Steuereinheit. Das Gerät kann an eine permanente Stromversorgung (Stromnetz) angeschlossen sein, es kann zusätzlich über einen Energiespeicher verfügen oder ausschließlich an einen Energiespeicher angeschlossen sein.

In einer Ausführungsform ist die RFID-Einheit eingerichtet, den steuerbaren Schalter permanent einzuschalten. Das permanente Einschalten kann z.B. mittels einer Selbsthalte-Schaltung realisiert sein.

Die RFID-Einheit ist eingerichtet, gemäß einer Ausführungsform Energie an einen oder von dem Energiespeicher zu übertragen. Dafür ist die RFID-Einheit eingerichtet, auf ein entsprechendes Kommando, z.B. durch Schalten des Lade-Pfads, Energie von der RFID-Einheit an den Energiespeicher zu übertragen, d.h. den Energiespeicher zu laden. Die RFID-Einheit kann weiterhin eingerichtet sein, Energie von dem Energiespeicher an die RFID-Einheit zu übertragen, d.h. über die RFID-Einheit das externe Kommunikationsgerät zu laden. Dabei wird eine Leistung von mindestens 10 mW, insbesondere von 1000 mW, übertragen.

Es können darüber hinaus noch weitere Kommandos an das Gerät übertragen werden, beispielsweise das Ein- und Ausschalten eines optischen Signals (z.B. einer grünen LED-Lampe) oder auch eines akustischen Signals (z.B. eines Summers).

Beispielsweise dadurch, dass das Gerät für das Auslesen und/oder das Verändern von Daten nicht eingeschaltet werden muss, kann das Gerät sehr energiesparend betrieben werden. Denn durch diese Systemarchitektur des Geräts ist es nicht mehr erforderlich, dass das gesamte Gerät ununterbrochen eingeschaltet ist, sondern Teile des Geräts können ausgeschaltet sein, wenn keine Messung oder Anzeige stattfindet. Bei einigen Ausführungsformen einer Anzeige-Vorrichtung können Teile des Geräts ausgeschaltet sein, solange die Anzeige sich nicht verändert. Beispiele derartiger Ausführungsformen beinhalten Anzeigevorrichtungen, die sogenanntes elektronisches Papier (E-Papier oder ePaper) verwenden. Weiterhin ist es bei Bedarf möglich, das Gerät jederzeit ein- oder auszuschalten, so dass sehr schnell auf eine Nutzung aller benötigten Merkmale des Geräts gewechselt werden kann. Weiterhin ermöglicht das Laden des Geräts eine lange Lebensdauer und das Laden eines externen Geräts durch das Gerät eine breite und komfortable Nutzung.

In einer Ausführungsform weist das Messgerät oder Anzeigegerät einen Energiespeicher auf. Dieser kann als Batterie, als Akkumulator (Akku) oder Kondensator, als Brennstoffzelle oder als eine ähnliche Vorrichtung ausgeführt sein. Der Energiespeicher kann ergänzend zu einer permanenten Stromversorgung ausgelegt sein, oder als Teil eines autarken Gerätes oder als eine Kombination beider Ausführungen.

In einer Ausführungsform weist das Gerät ein Messfrontend und/oder ein Anzeigefrontend auf. Das Gerät kann also mindestens zwei Typen von Frontends aufweisen, die nicht ununterbrochen betrieben werden, sondern erst, wenn sie über den Schalter mit dem Energiespeicher verbunden sind, d.h. eingeschaltet sind. Dabei ist das Messfrontend eingerichtet, einen Messwert, welcher einen Füllstand, einen Durchfluss oder einen Druck umfasst, zu messen. Das Messfrontend kann beispielsweise als Impedanzgrenzschalter, als Vibrationsgrenzschalter, als Füllstandradar, insbesondere als Hochfrequenzfrontend, als Ultraschallfrontend oder als Laserfrontend, ausgebildet sein. Das Anzeigefrontend ist eingerichtet, den Messwert anzuzeigen. Bei einer Anzeigevorrichtung können Teile des Geräts ausgeschaltet sein, wenn keine Anzeige stattfindet. Bei einigen Ausführungsformen einer Anzeigevorrichtung können Teile des Geräts ausgeschaltet sein, solange die Anzeige sich nicht verändert.

Das Gerät weist weiterhin eine Rechen- und Steuereinheit (im Weiteren auch kurz als "Recheneinheit" bezeichnet) auf, die zum Empfangen und zur Verarbeitung des Messwerts von dem Messfrontend und/oder zum Aufbereiten und Senden des Messwerts an das Anzeigefrontend eingerichtet ist. Die Recheneinheit ist über den steuerbaren Schalter mit dem Energiespeicher verbunden und kann daher ebenfalls über den Schalter - und mittels der Steuereinheit - ein- und ausgeschaltet werden. Die Rechen- und Steuereinheit ermöglicht z.B. eine Vorverarbeitung und/oder eine Verschlüsselung der Messdaten und trägt dazu bei, das Gerät flexibler und/oder für ein breiteres Anwendungsspektrum einzusetzen. Die Recheneinheit kann auch für die Parametrierung von Messfrontend und/oder Anzeigefrontend verwendet werden. Unter Parametrierung wird dabei die Anpassung des Messfrontends oder des Anzeigefrontends an den spezifizierten Anwendungsbereich verstanden. Beispiele sind bei Messfrontends der Standard-Messbereich oder Störsignalausblendung, bei Anzeigefrontends der Anzeigebereich.

Bei Ausführungsformen mit Messfrontend und/oder Anzeigefrontend kann durch die Systemarchitektur des Geräts der Energieverbrauch zumindest in einigen Ausführungsformen um mehrere Größenordnungen reduziert werden, weil eine Messung oder Anzeige deutlich weniger als eine Sekunde dauert, die Abstände zwischen den Messungen aber Stunden oder sogar mehrere Tage betragen können. Ferner ist durch die genannte Systemarchitektur des Geräts gewährleistet, dass auch auf das (zum größten Teil) abgeschaltete Gerät zugegriffen werden kann. Dabei können - auch bei dem abgeschalteten Gerät - beispielsweise Messdaten ausgelesen werden und/oder Parametrierdaten, Software-Updates und weitere Datenarten in den Speicher eingetragen werden.

Die Rechen- und Steuereinheit weist einen Speicher auf. Dies kann der Speicher sein, der mit der RFID-Einheit verbunden ist, es kann aber auch ein eigener Speicher sein, der in einigen Ausführungsformen, ggf. unter Verwendung eines Prozessors, auf den Speicher der RFID-Einheit zugreifen kann. Der Speicher kann - wenigstens teilweise - volatil oder nicht-volatil sein. Der Speicher wird beispielsweise für die Rechenoperationen der Recheneinheit verwendet, er kann aber auch für Parametrierdaten, für Steuerdaten, für Messdaten, für Zeitinformationen und weitere Arten von Daten verwendet werden. Der Speicher kann auch zum Empfangen und zur Verarbeitung des Messwerts von dem Messfrontend und/oder zum Aufbereiten und Senden des Messwerts an das Anzeigefrontend verwendet werden.

In einer Ausführungsform weist der Verbraucher weiterhin eine Funkeinheit auf, welche eingerichtet ist, Daten an einen Server zu übertragen und/oder von dem Server zu empfangen. Die Funkeinheit ist Sender und/oder Empfänger beispielsweise eines Niedrigenergieweitverkehrnetzwerks. Diese Netzwerke werden auch als LPWAN (Low Power Wide Area Network) bezeichnet. Die Funkeinheit dient zur Kommunikation mit anderen Geräten oder einem Server. Mit der Funkeinheit können beispielsweise Messdaten, eine Parametrierung, Zeitinformationen und weitere Daten übertragen werden.

In einer Ausführungsform weist der Verbraucher des Geräts weiterhin eine Kommunikationseinrichtung auf. Die Kommunikationseinrichtung kann - z.B. aus Gründen der Energieeinsparung - beispielsweise Kurzstrecken-Funktechnik verwenden, z.B. ein Protokoll aus der Familie der Wireless Personal Area Network (WPAN). Beispiele sind Verbindungen nach IEEE 802.15. Es kann sich z.B. um eine Verbindung handeln, die Bluetooth®, ZigBee®, CSS und/oder UWB verwendet, oder um eine Verbindung, die Infrarot-basierte Protokolle verwendet, z.B. ein Protokoll der IrDA (Infrared Data Association) oder ein proprietäres Protokoll. Die Verbindung kann auch ein Wireless LAN (WLAN) verwenden. Die Reichweite dieser Standards beträgt einige Meter, was ein komfortables Bedienen des Geräts ermöglicht. Da das Bedienen nur über einen relativ kurzen Zeitraum erfolgt, kann der Energiespeicher die dafür erforderliche erhöhte Versorgungsleistung ohne merkliche Einbuße an Entladung des Energiespeichers zur Verfügung stellen.

In einer Ausführungsform weist das Gerät weiterhin eine Konsole auf, die entweder über eine weitere Leitung mit dem Energiespeicher verbunden ist oder einen eigenen Energiespeicher aufweist. Dabei ist die Konsole eingerichtet, den steuerbaren Schalter, insbesondere mittels der Steuereinheit, ein- und auszuschalten. Die Konsole ist entweder über eine weitere Leitung mit dem Energiespeicher verbunden und/oder weist einen eigenen Energiespeicher auf. Die Konsole kann beispielsweise zum Ein- und Ausschalten des Geräts, zum Laden des Energiespeichers (wenn dieser aufladbar ist) oder zum Update von Software genutzt werden.

In einer Ausführungsform kann die Steuereinheit eine Zeitmanagementeinheit beinhalten, welche eingerichtet ist, den Schalter, mittels einer Zeitinformation, von der RFID-Einheit, von der Funkeinheit und/oder von der Konsole, zu steuern. Dabei kann die Zeitinformation eine absolute Zeit oder ein Zeitpunkt (z.B. "11:07"), eine relative Zeit oder eine Zeitdifferenz (z.B. "in 4 Stunden"), eine Kombination und/oder eine Wiederholung der absoluten oder relativen Zeit sein.

In einer Ausführungsform weist das Gerät weiterhin eine Energieregeleinheit auf, die eingerichtet ist, den über den steuerbaren Schalter verbundenen Verbraucher mit geregeltem Strom zu versorgen und, bei mehr als einem Verbraucher, die Verbraucher entweder alle über den steuerbaren Schalter verbundenen Verbraucher zusammen oder selektiv ein- und auszuschalten. Dabei kann eine Priorisierung und/oder eine situationsabhängige Einschaltung der Verbraucher vorgenommen werden. Die Energieregeleinheit kann darüber hinaus so ausgelegt sein, dass sie eine gleichmäßige Spannung für den oder die Verbraucher gewährleistet, auch wenn der Energiespeicher an Ladung bzw. an Spannung verloren hat.

Die Erfindung umfasst auch ein Verfahren zum Betrieb eines batteriebetriebenen Geräts wie oben beschrieben. Das Verfahren weist folgende Schritte auf:
- Empfangen eines externen Kommandos, insbesondere von einem externen Kommunikationsgerät, mittels einer RFID-Einheit. Das Kommando ist eine Art der Datenübertragung, welches Steuergeräte in dem Gerät ansteuert, vordefinierte Aktionen durchzuführen.
- Wenn das Kommando beinhaltet, Daten zu empfangen, übertragen der Daten von der RFID-Einheit an einen Speicher der Rechen- und Steuereinheit oder einen anderen Speicher in dem Gerät. Die Daten können beispielsweise Parametrierdaten, für Steuerdaten, für Messdaten, für Zeitinformationen und weitere Arten von Daten sein.
- Wenn das Kommando beinhaltet, Daten zu senden, übertragen der Daten von dem Speicher an die RFID-Einheit. Die Daten können von derselben Art wie bei den Empfangsdaten sein. Die Daten können auch z.B. Variablen des Prozessors sein, so dass - zusammen mit entsprechenden Sende-Kommandos - sogar ein Debugging des Geräts möglich ist.
- Wenn das Kommando beinhaltet, das Gerät ein- oder auszuschalten, wird der steuerbare Schalter ein- bzw. ausgeschaltet, mittels der RFID-Einheit und der Steuereinheit. In Ausführungsformen, bei denen die RFID-Einheit eingerichtet ist, mittels der Steuereinheit den steuerbaren Schalter ein- und auszuschalten, kann ein entsprechendes Kommando die dafür eingerichteten Steuerpfade freischalten. Bei einer Ausführungsform, bei der ein permanentes Einschalten unterstützt wird, kann dies z.B. mittels einer Selbsthalte-Schaltung realisiert sein.
- Wenn das Kommando beinhaltet, einen Energiespeicher des Geräts zu laden, übertragen von Energie von der RFID-Einheit an den Energiespeicher. In Ausführungsformen, bei denen die RFID-Einheit eingerichtet ist, den Energiespeicher zu laden, kann ein entsprechendes Kommando die dafür eingerichteten Steuer- und Stromübertragungspfade freischalten.

Die Erfindung umfasst ferner ein Programmelement, welches, wenn es auf einer Zeitmanagementeinheit und/oder auf einer Rechen- und Steuereinheit ausgeführt wird, geeignet ist, eines der oben genannten Verfahren durchzuführen.

Die Erfindung umfasst weiterhin ein computerlesbares Medium, auf dem das genannte Programmelement gespeichert ist.

Zur weiteren Verdeutlichung wird die Erfindung anhand von in den Figuren abgebildeten Ausführungsformen beschrieben. Diese Ausführungsformen sind nur als Beispiel, nicht aber als Einschränkung zu verstehen.

### Beschreibung der Figuren

**Fig. 1** zeigt schematisch ein erstes Ausführungsbeispiel eines Geräts;
**Fig. 2** zeigt schematisch ein weiteres Ausführungsbeispiel eines Geräts;
**Fig. 3** zeigt schematisch ein weiteres Ausführungsbeispiel eines Geräts;
**Fig. 4** zeigt schematisch ein weiteres Ausführungsbeispiel eines Geräts;
**Fig. 5** zeigt schematisch ein weiteres Ausführungsbeispiel eines Geräts;
**Fig. 6** zeigt schematisch ein weiteres Ausführungsbeispiel eines Geräts;
**Fig. 7** zeigt schematisch ein weiteres Ausführungsbeispiel eines Geräts;
**Fig. 8** zeigt schematisch ein weiteres Ausführungsbeispiel eines Geräts;
**Fig. 9** zeigt ein Verfahren zum Betrieb eines Geräts.
**Fig. 10** zeigt ein weiteres Verfahren zum Betrieb eines Geräts.

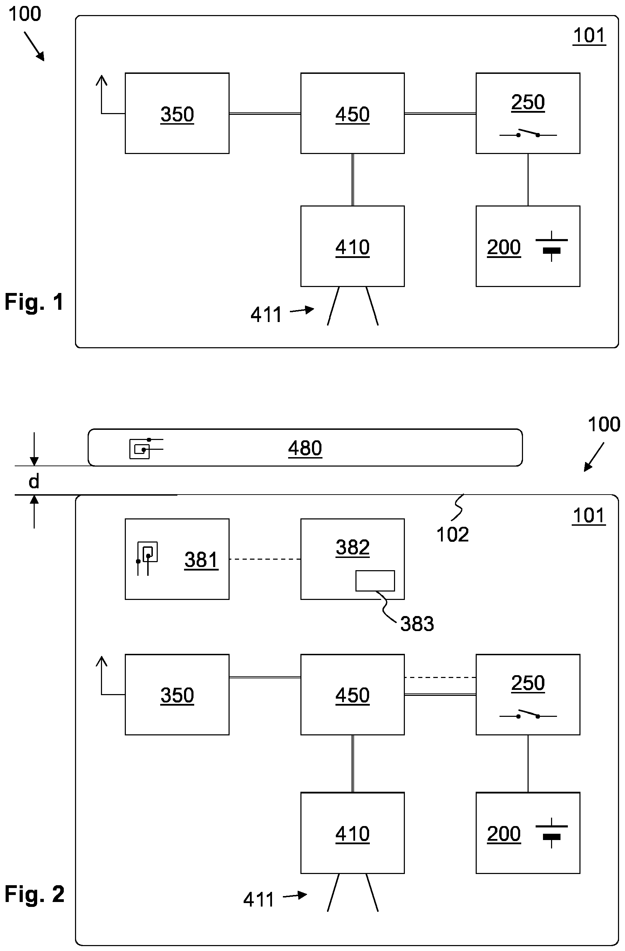

**Fig. 1** zeigt ein autonom arbeitendes Radarfüllstandmessgerät 100. Die komplette Elektronik befindet sich in einem hermetisch abgedichteten, die Elektronik vollständig umschließenden Gehäuse 101, welches das Eindringen von Staub oder Feuchtigkeit wirksam unterbindet. Im Gehäuse 101 befindet sich ein Energiespeicher 200, welcher die komplette Sensorelektronik mit Energie versorgt. Das System wird in vorgebbaren Zeitabständen, beispielsweise einmal pro Tag, aktiviert, indem der steuerbare Schalter 250 die Energieversorgung für den Prozessor 450 freigibt. Der Prozessor 450 initialisiert sich daraufhin und/oder bootet ein Betriebssystem. Nach Abschluss der Initialisierung steuert eine im Prozessor 450 integrierte Ablauflogik das Erfassen und Bereitstellen eines neuen Messwertes. Hierzu aktiviert der Prozessor zunächst die Messwertbestimmungseinheit 410, welche beispielsweise ein Hochfrequenzsignal erzeugt, über die Antenne 411 durch die Gehäusewandung bzw. Sensorwandung 102 abstrahlt, und die vom Füllgut reflektierten Signale wieder empfängt, aufbereitet und schließlich in digitalisierter Form dem Prozessor 450 zur weiteren Verarbeitung zur Verfügung stellt. Die Messwertbestimmungseinheit des Messfrontends 410 kann nach Durchführen der beschriebenen Schritte wieder deaktiviert werden. Der Prozessor 450 bestimmt aus den reflektierten Signalen den Abstand zu einem Füllgut. Nach Aktivierung der drahtlosen Kommunikationseinrichtung 350 wird der ermittelte Messwert drahtlos einem übergeordneten Kommunikationsnetz bereitgestellt, wobei hierzu insbesondere energieoptimierte Verfahren zur drahtlosen Kommunikation wie LoRA (LoRaWAN: Long Range Wide Area Network), Sigfox (ein proprietäres Low-Power-Protokoll der französischen Firma Sigfox im ISM-Band) oder NB-IoT (Narrowband IoT) verwendet werden. Ein Merkmal dieser Standards ist, dass die Verbindung zum übergeordneten Kommunikationsnetz nicht fortwährend bestehen muss, sondern dass vielmehr zu im Wesentlichen frei wählbaren Zeitpunkten bedarfsorientiert eine Verbindung hergestellt wird. Nach Übermittlung des Messwertes wird der Übertragungskanal zeitnah wieder geschlossen, und die Kommunikationseinrichtung 350 deaktiviert. Der Prozessor 450 öffnet nach Abschluss der Messung den steuerbaren Schalter 250, wodurch die Systemkomponenten 350, 450, 410, 411 in einen energielosen oder energiesparenden Zustand überführt werden. Der Sensor 350 besitzt aus Energiespar- und Kostengründen weder eine Anzeige- noch eine Bedieneinheit, sodass eine Veränderung der Sensoreinstellungen oder ein Softwareupdate per Vor-Ort-Bedienung nicht ohne weiteres möglich ist. Das Gerät 100 in der Ausführungsform von Fig. 1 kann, wenn der Schalter 250 offen ist, nicht mehr über die drahtlose Kommunikationseinrichtung 350 erreicht werden, weil auch diese dann abgeschaltet ist.

Fig. 2 zeigt ein weiteres Ausführungsbeispiel eines Messgeräts 100. Das Messgerät 100 besitzt innerhalb des hermetisch umhüllenden Gehäuses 101 eine RFID-Antenne 381 sowie eine damit verbundene RFID-Elektronik 382, beispielsweise einen RFID-Chip mit integriertem persistentem Speicher 383. Es kann auch vorgesehen sein, die zuvor beschriebenen Bauteile oder Teile davon integral in die Gehäusewandung 102 zu integrieren, beispielsweise durch Umspritzen mit Kunststoff innerhalb eines Spritzgussprozesses. Der Speicher 383 der RFID-Elektronik 382 kann mit einem externen Lesegerät 480 drahtlos ausgelesen und/oder beschrieben werden. Hierzu überträgt das Lesegerät 480 mit Hilfe elektromagnetischer Kopplung Energie an die Spule 381 und somit an die RFID-Elektronik 382. Diese versorgt mit der bereitgestellten Energie die internen Schaltkreise und hierbei insbesondere den Speicher 383, wodurch ein Auslesen sensorspezifischer Informationen (Hersteller, Seriennummer, Zulassungen, Bestellcode, Zeitpunkt der nächsten Aktivierung, etc.) möglich wird. Besonders vorteilhaft ist dabei die Verwendung der NFC-Technologie, welche auf RFID basiert. Da die entsprechenden Schaltkreise zum Auslesen von NFC-Chips 382 in vielen Smartphones 480 oder Tablets 480 verfügbar sind, kann durch Aufspielen einer passenden App auf einfache Art ein Lesegerät zum Auslesen der Informationen des Speichers 383 bereitgestellt werden. Es kann auch vorgesehen sein, Informationen im Speicher 383 abzulegen. So kann vorgesehen sein, die aktuelle Parametrierung des Sensors 100 aus dem Speicher 383 auszulesen, in einer App zu verändern, und nach Herstellen einer Internetverbindung zu einer Cloud die veränderte Parametrierung dort zu hinterlegen. Zusätzlich kann die veränderte Parametrierung im Speicher 383 abgelegt werden. Beim nächsten Aktivieren eines Messdurchlaufes und Übertragung des neuen Messwertes via der Kommunikationseinrichtung 350 kann die dann aktive Verbindung genutzt werden, um die in der Cloud hinterlegte Information an das Gerät 100 zu übertragen, und dort persistent abzulegen. Auf diese Weise wird eine zeitversetzte Veränderung der Parametrierung des Sensors möglich, ohne den genauen Zeitpunkt der nächsten Wiedereinwahl via die Kommunikationseinrichtung 350 kennen zu müssen. Gleichzeitig kann die Parametrierung jederzeit aus dem Speicher 383 ausgelesen werden. Durch Kenntnis des Zeitpunktes der nächsten Aktivierung kann auch jederzeit festgestellt werden, ob die veränderte Parametrierung im Sensor bereits wirksam ist oder nicht.

Eine Vorrichtung gemäß Fig. 2 und das genannte Beispiel-Verfahren kann dazu führen, dass Veränderungen der Sensorparametrierung erst mit einem Zeitversatz - von beispielsweise einem Tag - im Sensor wirksam werden.

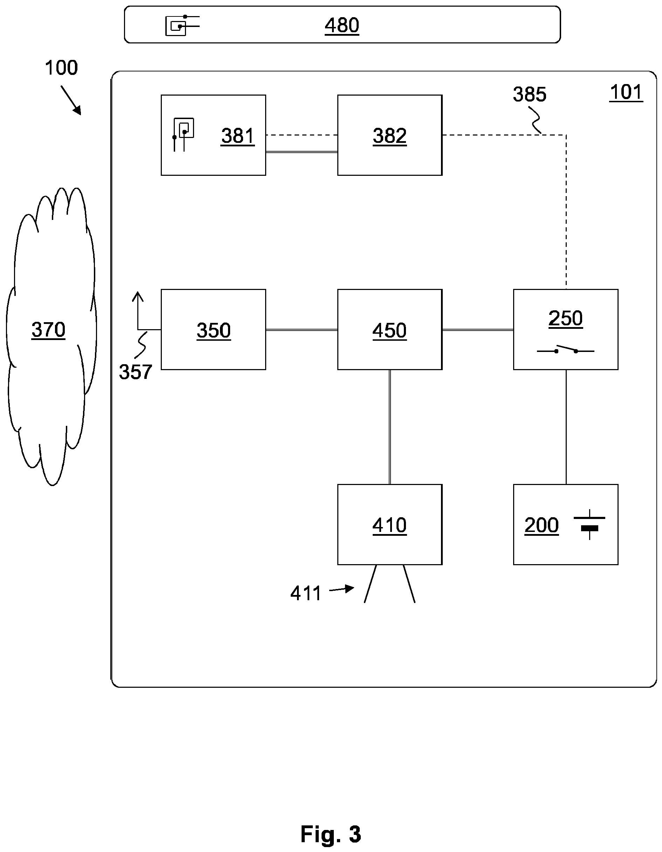

**Fig. 3** zeigt ein weiteres Ausführungsbeispiel, das den Vorteil einer verbesserten Interaktion mit dem Benutzer aufweist. Das erfindungsgemäße Messgerät 100 weist eine gegenüber der **Fig. 2** erweiterte RFID Elektronik 382 auf, welche über eine Verbindungsleitung 385 mit dem steuerbaren Schalter 250 verbunden ist. Wird über ein Bediengerät 480 Energie - über die RFID-Antenne 381 auf den RFID Schaltkreis 382 - übertragen, so aktiviert diese Energie oder dieses Kommando über die Verbindungsleitung 385 den steuerbaren Schalter 250, woraufhin der Prozessor 450 aktiviert wird, welcher insbesondere die Kommunikationseinrichtung 350 aktiviert, um eine Verbindung 357 in eine Cloud 370 aufzubauen. Das Bediengerät 480 wiederum baut seinerseits eine Verbindung zu der Cloud 370 auf, aus welcher es die vom Sensor bereitgestellten Informationen (z.B. Messwerte, Parametrierung) abrufen und in einer Bedienoberfläche darstellen kann. Weiterhin kann vorgesehen sein, dass das Bediengerät 480 Informationen in die Cloud 370 zurückschreibt, welche wiederum von einem entsprechend eingerichteten Sensor 100 zeitnah (z.B. durch zyklisches Pollen) abgerufen werden können. Die RFID-Einrichtung 381, 382 dient im vorliegenden Beispiel primär der Aktivierung des Prozessors 450, woraufhin der eigentliche Kommunikationskanal zur Bedienung des Prozessors 450 und/oder dees Messfrontends 410 über die vorhandene Low-Power-Kommunikationseinrichtung 350 erfolgt. Gegenüber dem Ausführungsbeispiel der **Fig. 2** zeichnet sich die vorgeschlagene Erweiterung durch eine deutlich verkürzte Reaktionszeit, d.h. im Bereich von einigen Sekunden, aus (bedingt durch die Laufzeit Smartphone via Cloud zurück zum Sensor), wodurch ein interaktives Bedienen des Sensors mit zeitnahem Rückmelden von Statusinformationen ermöglicht wird.

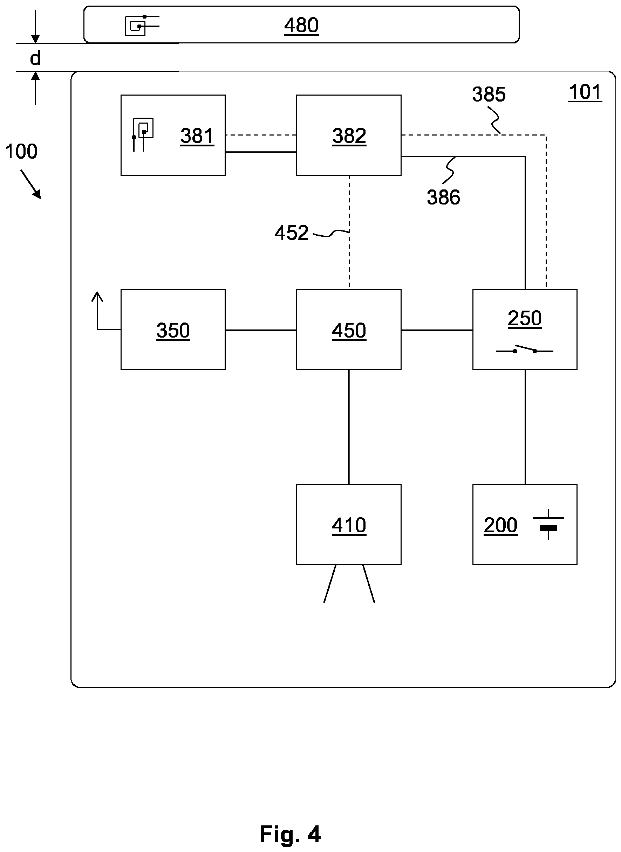

Eine weiter verbesserte Interaktion zwischen Bediengerät 480 und Messgerät 100 zeigt **Fig. 4****.** Die von dem Bediengerät 480 übertragene Energie bzw. das Kommando bewirkt zunächst ein Schließen des Schalters 250, woraufhin der Prozessor 450 initialisiert wird und/oder bootet. Anschließend wird der RFID-Chip 382 mit Energie von dem Energiespeicher 200 versorgt, beispielsweise über die Leitung 386, welche mit dem oder den RFID-Chips 382 verbunden ist. Durch das Aufschalten zusätzlicher Energie auf den RFID-Chip 382 wird dieser unabhängig von der vom Lesegerät 480 übertragenen Energie, was insbesondere ermöglicht, über eine Kommunikationsleitung 452 direkt mit dem Prozessor 450 in Verbindung zu treten. Der Prozessor 450 kann folglich direkt Informationen aus dem Speicher 383 des RFID-Chips 381 lesen und auch wieder in diesen schreiben, woraufhin diese über die Antenne 381 drahtlos an das Bediengerät 480 übertragen werden. Im Vergleich zur Kommunikation über die Cloud sind zum einen die erreichbaren Datendurchsatzraten stark verbessert, zum anderen aber auch die Latenzzeiten stark reduziert, was zu einer intuitiven Interaktion des Benutzers mit dem Messgerät beitragen kann. Der zuvor aufgezeigte Kommunikationsweg ist unabhängig von der Low-Power-Kommunikationseinrichtung 350, und ermöglicht insbesondere die schnelle Übertragung größerer Datenmengen, beispielsweise bei einem Softwareupdate. Nach Entfernen des Lesegerätes 480 deaktiviert der RFID-Chip 382 über die Leitung 385 den steuerbaren Schalter 250, woraufhin das System in seinen Ruhezustand zurückfällt und weiterhin nur minimal Energie benötigt.

Das System gemäß der Darstellung der **Fig. 4** ermöglicht ein flüssiges Interagieren mit dem Messgerät 100. Ergonomisch ungünstig hingegen ist die Tatsache, dass ein Abstand d zwischen dem Gehäuse 101 des Messgeräts 100 und dem Bediengerät 480 während der kompletten Bediensequenz hinweg in einem Bereich weniger cm (bis etwa maximal 10 cm) gehalten werden muss. In Abhängigkeit von der Montageposition des Messgeräts 100 kann dies unangenehme Körperhaltungen des Benutzers nach sich ziehen, welche den Bedienkomfort reduzieren.

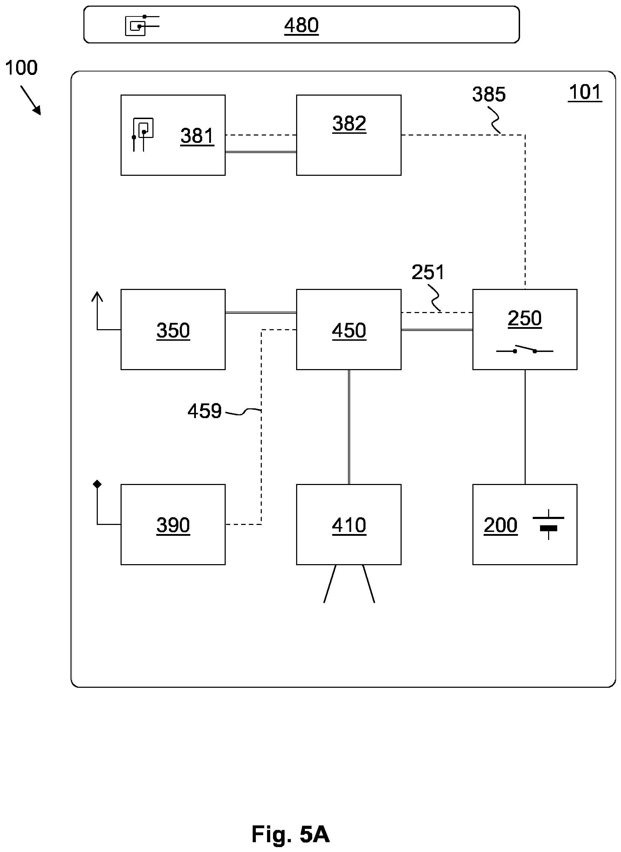

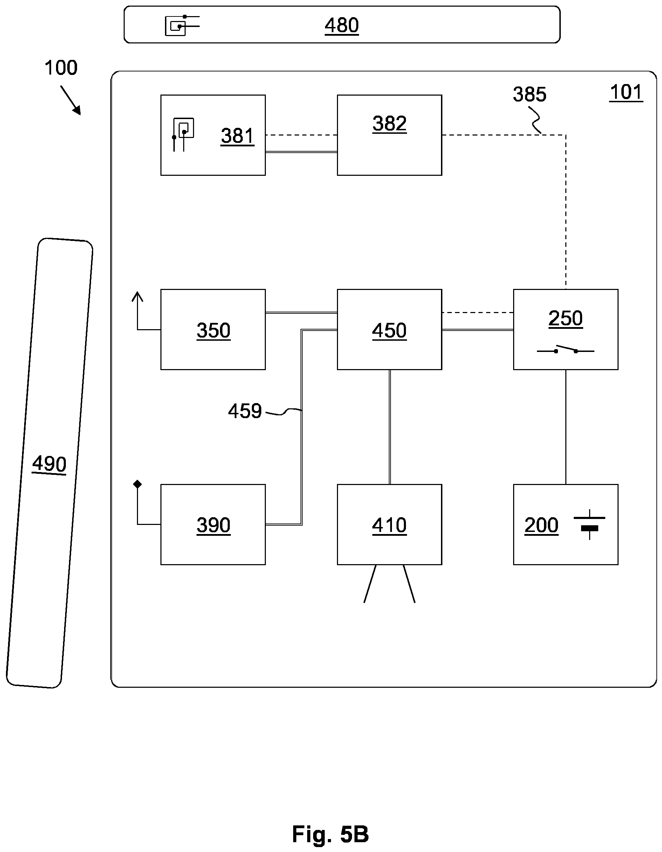

**Fig. 5A** zeigt eine weitere Ausgestaltung eines Messgeräts 100, welche den Bedienkomfort für den Benutzer weiter erhöht. Der Sensor verfügt über die RFID-Schaltung 382 von **Fig. 3****,** welche nach Übertragung von Energie auf die Spule 381 mit Hilfe der Verbindung 385 den elektronischen Schalter 250 schließt. Der Prozessor 450 wird nachfolgend mit Energie versorgt, was diesen dazu veranlasst, sich neu zu initialisieren und/oder zu booten. Der Prozessor 450 realisiert über eine Rückkopplungsleitung 251 eine Selbsthaltung, d.h. er versorgt den steuerbaren Schalter 250 mit Signalen, welche dazu geeignet sind, die Energieversorgung fortwährend aufrechtzuerhalten. Das Bediengerät 480 kann folglich aus der unmittelbaren Nähe (Abstand d) wieder entfernt werden, was dem Benutzer das Einnehmen einer angenehmen Bedienposition ermöglicht. **Fig. 5B** zeigt die entsprechende Konfiguration. Der Prozessor 450 aktiviert nach erfolgreichem Initialisieren und/oder Booten über eine Steuer- und Kommunikationsleitung 459 eine weitere, sekundäre Kommunikationseinrichtung 390. Im Gegensatz zur primären Kommunikationseinrichtung 350, welche aus Gründen der Energieeinsparung und der Reichweite vorzugsweise einen Kommunikationsstandard aus der Familie der LPWANs (z.B. LoRa, Sigfox, NB-IOT) implementiert, werden für die sekundäre Kommunikationseinrichtung 390 energieintensivere Standards, vorzugsweise Kommunikationsstandards aus der Familie der WPANs (z.B. IrDA, Bluetooth) oder WLANs verwendet. Die Reichweite dieser Standards beträgt einige Meter, was ein komfortables Bedienen des Sensors ermöglicht. Da das Bedienen nur über einen relativ kurzen Zeitraum erfolgt, kann der Energiespeicher 200 die dafür notwendige erhöhte Versorgungsleistung ohne merkliche Einbußen an der Lebensdauer problemlos zur Verfügung stellen. Das Bediengerät 490 kommuniziert nun über die sekundäre Kommunikationseinrichtung 390 und mittels des sekundären Kommunikationsstandards mit dem Messgerät 100, um beispielsweise Messwerte, Parameter oder Fehlermeldungen auszulesen und/oder Parameter oder auch Softwareupdates in das Gerät 100 einzuspielen.

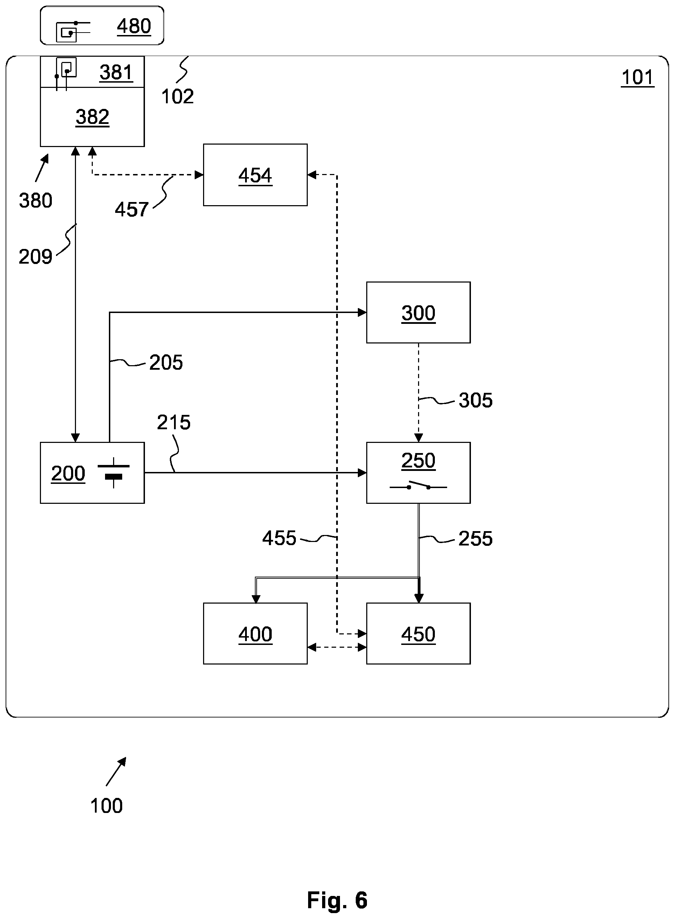

Das Ausführungsbeispiel des Messgeräts 100 von **Fig. 6** weist ein Gehäuse 101 auf, das insbesondere zum Schutz des Geräts 100 vor Witterungseinflüssen dient. Das Gehäuse 101 kann in einigen Ausführungsformen vollständig gekapselt sein. Das Gerät 100 weist einen Energiespeicher 200 auf. Dieser kann als Batterie, als Akkumulator (Akku), als Brennstoffzelle oder als eine ähnliche Vorrichtung ausgeführt sein. Der Energiespeicher 200 ist über eine erste Leitung 205 mit einer Steuereinheit 300 verbunden. Die Steuereinheit 300 steuert, über die Steuerleitung oder das Interface 305 einen steuerbaren Schalter 250. Der steuerbare Schalter 250 ist über die Leitung 215 mit dem Energiespeicher 200 verbunden. Weiterhin sind eine Recheneinheit 450 und ein Verbraucher 400 über die Leitung 255 mit dem Schalter 250 verbunden. Die Recheneinheit 450 ist mit einem Speicher 454 über ein Interface 455 verbunden. Der Speicher 454 kann direkt oder indirekt mit dem Speicher 383 der RFID-Elektronik 382 verbunden sein oder auch mit diesem teilweise überlappen. Der Verbraucher 400 kann beispielsweise ein Messfrontend 410 und/oder ein Anzeigefrontend 420 und/oder ein anderes Gerät sein. Der steuerbare Schalter 250 kann also die Stromversorgung des Verbrauchers 400 und der Recheneinheit 450 vollständig abschalten. Durch die gezeigte Anordnung lassen sich sogar alle Verbraucher 400, die hinter dem Schalter 250 ("hinter": von dem Energiespeicher 200 aus gesehen) angeordnet sind, komplett stromlos schalten. Durch diese Systemarchitektur ist es nicht mehr erforderlich, dass das gesamte Messgerät oder Anzeigegerät 100 ununterbrochen eingeschaltet bleibt, sondern Teile des Geräts 100 - in dem Ausführungsbeispiel von **Fig. 6**: die Recheneinheit 450 und ein oder mehrere Verbraucher 400 - können ausgeschaltet sein, wenn keine Messung stattfindet. Bei einer Anzeigevorrichtung können Teile des Geräts 100 ausgeschaltet sein, wenn keine Anzeige stattfindet. Weil die Elemente Verbraucher 400 und Recheneinheit 450 den meisten Strom des Geräts 100 verbrauchen, kann der Energieverbrauch in der gezeigten Ausführungsform um mehrere Größenordnungen reduziert werden; denn eine Messung oder Anzeige oder Aktualisierung einer Anzeige dauert deutlich weniger als eine Sekunde, die Abstände zwischen den Messungen oder Änderungen einer Anzeige können aber Stunden oder sogar mehrere Tage betragen. In einer Ausführungsform kann der Schalter 250 eingerichtet sein, die gezeigten Verbraucher 400 entweder zusammen oder selektiv ein- und auszuschalten.

Das Gerät 100 weist weiterhin eine RFID-Einheit 380 auf. Die RFID-Einheit 380 kann beispielsweise in oder an der Gehäusewandung 102 des Gehäuses 101 angeordnet sein. Die RFID-Einheit 380 ist in dem gezeigten Ausführungsbeispiel über die Leitung 209 kontinuierlich mit dem Energiespeicher 200 verbunden. In einer anderen Ausführungsform kann die Leitung 209 entfallen, so dass die RFID-Einheit 380 ausschließlich von einem externen Kommunikationsgerät Strom bezieht. In einer anderen Ausführungsform kann das Gerät 100 eine Verbindung zu einer externen Stromversorgung, beispielsweise zu einem Stromnetz, aufweisen.

Die RFID-Einheit 380 weist eine RFID-Antenne 381 und einen RFID-Schaltkreis 381 auf. Die RFID-Antenne 381 kann als Spule ausgebildet sein. Der RFID-Schaltkreis 381 unterstützt das in dem Gerät 100 verwendete Protokoll, beispielsweise ein NFC-Protokoll oder ein proprietäres Protokoll. Das proprietäre Protokoll kann eine Übermenge eines Standard-Protokolls sein. Die RFID-Einheit 380 ist eingerichtet, auf ein externes Kommando, insbesondere von einem externen Kommunikationsgerät 480, zu reagieren und gegebenenfalls mit dem Speicher 454 und/oder dem Speicher 383 der RFID-Elektronik 382 (hier nicht gezeigt) Daten auszutauschen. Das Kommando ist eine Art der Datenübertragung, welches Steuergeräte bzw. steuernde Komponenten in dem Gerät 100 anweist, vordefinierte Aktionen durchzuführen. Das Kommando kann darin bestehen, Daten von der RFID-Einheit 380, über das Interface 457, an den Speicher 454 der Recheneinheit 450 zu übertragen. Das Kommando kann darin bestehen, Daten von dem Speicher 454 an die RFID-Einheit 380 zu übertragen. Das Kommando kann auch darin bestehen, einen Energiespeicher des Geräts zu laden. Dies kann über den optionalen Stromübertragungspfad 209 geschehen (wenn dieser in der verwendeten Ausführungsform des Geräts 100 vorhanden ist).

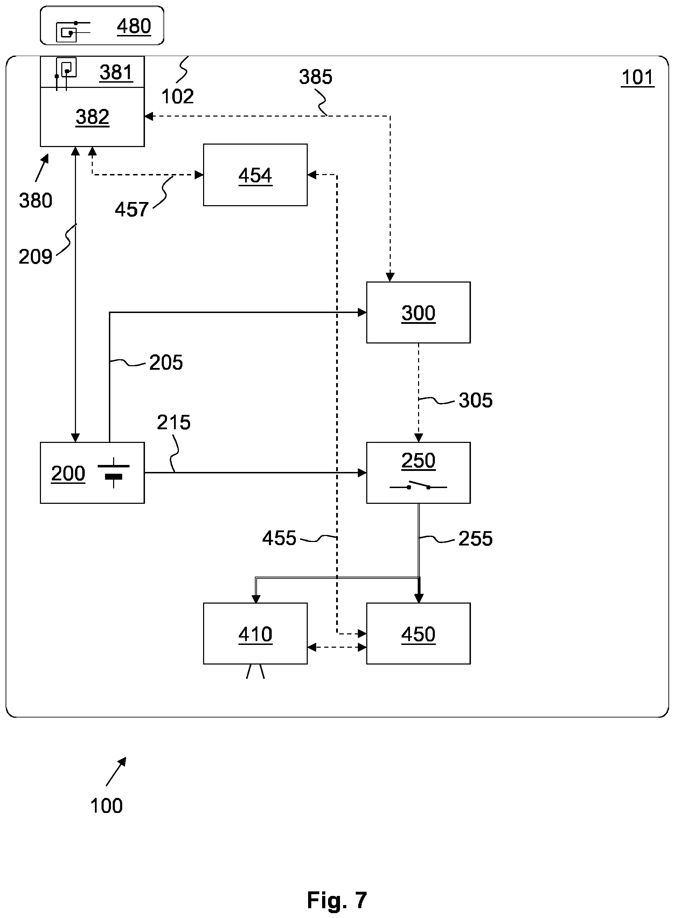

Das Ausführungsbeispiel des Geräts 100 von **Fig. 7** weist dieselben Elemente auf wie **Fig. 6** und ist auch mit denselben Bezugszeichen versehen. Zusätzlich weist **Fig. 7** ein Interface 385 auf, mittels dessen die RFID-Einheit 380 eine Steuereinheit 300 ansteuern kann. Damit kann der Schalter 250 angesteuert werden und so die Komponenten hinter dem Schalter 250 ein- und ausgeschaltet werden. In einer Ausführungsform kann auch der Schalter 250 direkt von der RFID-Einheit 380 angesteuert werden. In dem gezeigten Ausführungsbeispiel sind die Komponenten ein Messfrontend 410 und die Rechen- und Steuereinheit 450. Die Recheneinheit 450 ist mit dem Speicher 454 verbunden, so dass, mittels dieses Speichers 454, im Betrieb Daten mit der RFID-Einheit 380 ausgetauscht werden können. Bei ausgeschalteter Recheneinheit 450 können die von der RFID-Einheit 380 in den Speicher 454 eingetragenen Daten genutzt werden - zum Steuern oder für Berechnungen - oder es können von der der RFID-Einheit 380 Daten ausgelesen werden, die von der Recheneinheit 450 eingetragen wurden.

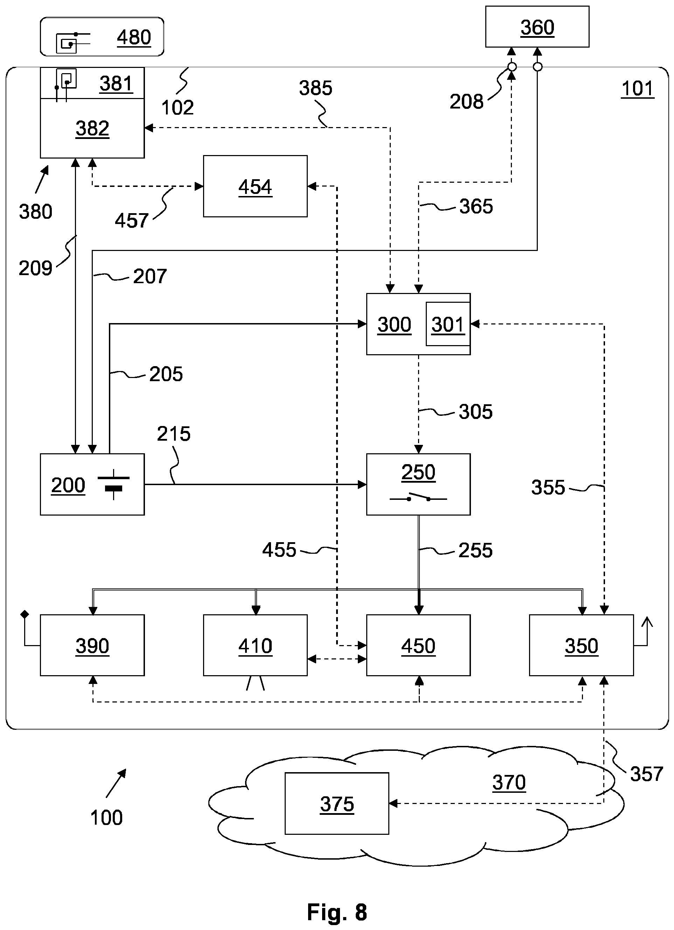

Das Ausführungsbeispiel von **Fig. 8** zeigt außer den Elementen von **Fig. 7** noch weitere Elemente eines batteriebetriebenen Geräts 100, das als batteriebetriebenes Gerät ausgelegt ist. Das Gerät 100 weist dabei eine Funkeinheit 350 auf, die mit dem Energiespeicher 200 über den Schalter 250 verbunden ist. Die Funkeinheit 350 ist eingerichtet, Informationen zu senden und zu empfangen. Die Funkeinheit 350 kann nur dann betrieben werden, wenn der Schalter 250 eingeschaltet ist und so die Funkeinheit 350 mit dem Energiespeicher 200 verbunden ist. Die Funkeinheit 350 ist insbesondere auch geeignet, eine Zeitinformation über die nächste Messung über ein erstes Interface 355 an die Zeitmanagementeinheit 301, welche Teil der Steuereinheit 300 sein kann, zu übertragen und/oder von der zu Zeitmanagementeinheit 301 zu empfangen, wenn der Schalter 250 eingeschaltet ist. Die Zeitinformation kann eine absolute Zeit, eine relative Zeit und/oder eine Kombination oder Wiederholung der absoluten oder relativen Zeit sein. Die Funkeinheit 350 kann mit einem Server 375 kommunizieren, der sich in einer Cloud 370 befindet. Dabei können beispielsweise Messwerte oder auch Zeitinformationen ausgetauscht werden. Die Funkeinheit 350 kann auch - mittels der Zeitmanagementeinheit 301, welche Teil der Steuereinheit 300 ist - mittels einer Zeitinformation die Steuereinheit 300 steuern.

Weiter weist das Ausführungsbeispiel eine Kommunikationseinrichtung 390 auf. Die Kommunikationseinrichtung 390 kann beispielsweise Kurzstrecken-Funktechnik verwenden, z.B. ein Protokoll aus der Familie der Wireless Personal Area Network (WPAN), ein Protokoll der IrDA (Infrared Data Association) oder ein proprietäres Protokoll. Die Verbindung kann auch ein Wireless LAN (WLAN) verwenden. Die Kommunikationseinrichtung 390 kann beispielsweise verwendet werden, um Messwerte, Parameter oder Fehlermeldungen auszulesen und/oder Parameter oder auch Softwareupdates, z.B. in den Speicher 454 des Geräts 100, einzuspielen.

Die gezeigte Ausführungsform weist auch eine Konsole 360 auf, die über die Leitung 207 und einen Anschluss 208 mit dem Energiespeicher 200 verbunden ist. Der Anschluss 208 kann als Stecker implementiert sein und in einer Ausführungsform auch zum Anschluss des Interfaces 365 dienen. Die Konsole 360 kann einen eigenen Energiespeicher aufweisen (in **Fig. 7** nicht gezeigt), der so eingerichtet sein kann, dass damit der Energiespeicher 200 des Geräts 100 - wenn der Energiespeicher 200 aufladbar gestaltet ist - geladen werden kann.

Die Recheneinheit 450 kann mit dem Verbraucher 400 (bzw. Messfrontend 410 und/oder Anzeigefrontend 420), der Funkeinheit 350, der Kommunikationseinrichtung 390 direkt Informationen austauschen. Mit der RFID-Einheit 380 kann die Recheneinheit 450 über den Speicher 454 Informationen austauschen.

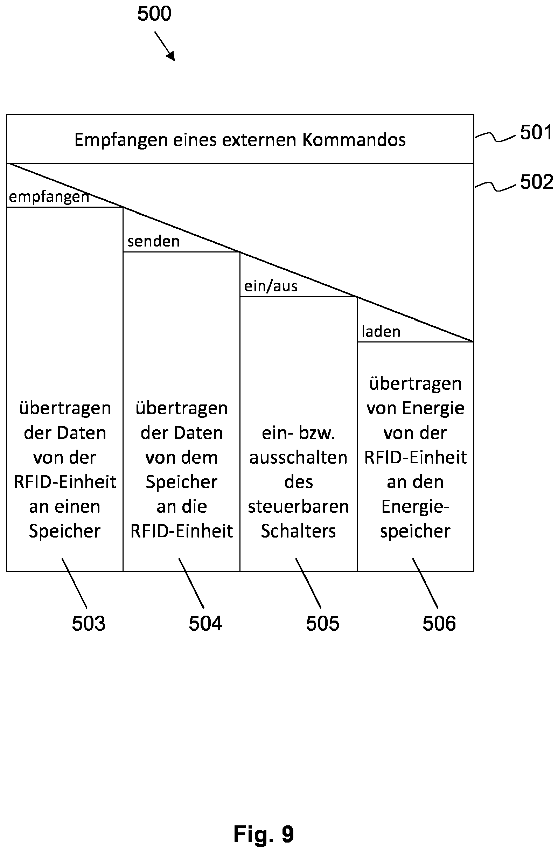

In **Fig. 9** ist ein Verfahren 500 zum Betrieb eines batteriebetriebenen Geräts 100 in Form eines Nassi-Shneiderman-Diagramms schematisch dargestellt. In Schritt 501 wird von dem Gerät 100, mittels einer RFID-Einheit 380, ein externes Kommando empfangen. Das Kommando kann insbesondere von einem externen Kommunikationsgerät 480 gesandt worden sein. Das Kommando ist eine Art der Datenübertragung, welches Steuergeräte in dem Gerät ansteuert, vordefinierte Aktionen durchzuführen. Die vordefinierte Aktion wird in dem Schritt 502 festgestellt.

Wenn das Kommando beinhaltet, Daten zu empfangen, wird Schritt 503 durchgeführt. In Schritt 503 werden die Daten von der RFID-Einheit 380 an einen Speicher 454 der Rechen- und Steuereinheit 450 in dem Gerät 100 übertragen. Die Daten können beispielsweise Parametrierdaten, für Steuerdaten, für Messdaten, für Zeitinformationen und weitere Arten von Daten sein.

Wenn das Kommando beinhaltet, Daten zu senden, wird Schritt 504 durchgeführt. In Schritt 504 werden die Daten von dem Speicher 454 an die RFID-Einheit 380 übertragen. Die RFID-Einheit 380 kann die Daten speichern, zwischenspeichern und/oder an das Kommunikationsgerät 480 weiterleiten. Die Daten können von derselben Art wie bei den Empfangsdaten sein. Die Daten können auch z.B. Messwerte oder Variablen des Prozessors sein, so dass - zusammen mit entsprechenden Sende-Kommandos - sogar ein Debugging des Geräts möglich ist.

Wenn das Kommando beinhaltet, das Gerät ein- oder auszuschalten, wird Schritt 505 durchgeführt. In Schritt 505 steuert die RFID-Einheit 380, über das Interface 385, die Steuereinheit 300. Die Steuereinheit 300 wiederum steuert, über die Steuerleitung oder das Interface 305, den steuerbaren Schalter 250, um die Geräte, die über die Versorgungsleitung 255 verbunden sind, insgesamt oder selektiv ein- oder auszuschalten. Bei einer Ausführungsform, bei der ein permanentes Einschalten unterstützt wird, kann dies z.B. mittels einer Selbsthalte-Schaltung realisiert sein. Bei einer Ausführungsform, bei der ein permanentes Einschalten unterstützt wird, kann auch dieses gewählt werden und z.B. mittels einer Selbsthalte-Schaltung (nicht dargestellt) realisiert sein.

Wenn das Kommando beinhaltet, einen Energiespeicher des Geräts zu laden, wird Schritt 506 durchgeführt. In Schritt 506 wird Energie von der RFID-Einheit 380 an den Energiespeicher 200 übertragen. In Ausführungsformen, bei denen die RFID-Einheit 380 dafür eingerichtet ist, den Energiespeicher 200 zu laden, werden die dafür eingerichteten Steuerpfade und der Stromübertragungspfad 209 freigeschaltet.

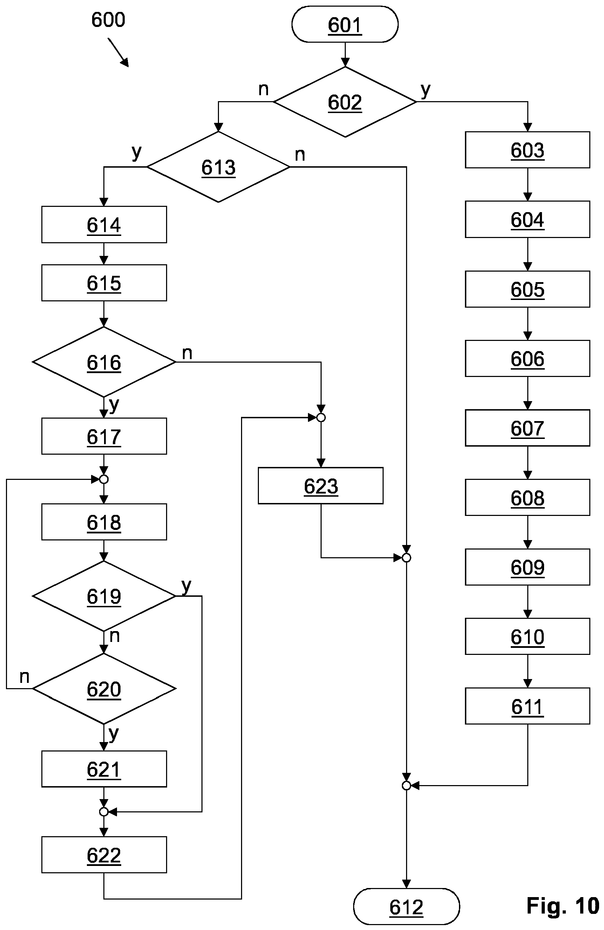

**Fig. 10** zeigt ein Ablaufdiagramm zum Betrieb des Geräts 100. Das Verfahren 600 beginnt im Startzustand 601. Im Schritt 602 wird überprüft, ob das vordefinierte Zeitintervall zwischen zwei Messungen bereits abgelaufen ist.

Ist dies der Fall, so wird im Schritt 603 der Prozessor aktiviert, was im vorliegenden Beispiel mit dem Initialisieren und/oder Booten und/oder Aufwecken aus einem energiesparenden Power-Down-Modus entspricht. Im Schritt 604 aktiviert der Prozessor 450 die Messwertbestimmungseinheit 410, welche beispielsweise als Hochfrequenzfrontend, Ultraschallfrontend oder Laserfrontend ausgeführt sein kann. Im Schritt 605 wird die eigentliche Messung zur Bestimmung des Abstandes zum Füllgut ausgeführt, und das ermittelte Ergebnis an den Prozessor 450 übertragen. Im Schritt 606 wird die Messwertbestimmungseinheit 410 wieder deaktiviert, um Energie zu sparen. Im Schritt 607 bestimmt der Prozessor auf Basis der übermittelten Daten den Abstand zum Füllgut und/oder daraus ableitbare Werte (Volumen, Befüllgrad, u.a.). Zur Übertragung dieses Messwertes wird im Schritt 608 die primäre Kommunikationseinheit 350 aktiviert, welche im Schritt 609 den Messwert nach einem LPWAN-Verfahren an eine Netzinfrastruktur überträgt. Im Schritt 610 wird der primäre Kommunikationsbaustein 350 wieder deaktiviert, um Energie zu sparen. Im Schritt 611 veranlasst der Prozessor 450 ein Öffnen des steuerbaren Schalters 250, was zur Folge hat, dass der Prozessor deaktiviert wird. Der Ablauf mündet in den Endzustand 612. Die oben beschriebene Abfolge von Verfahrensschritten beschreibt im Wesentlichen den normalen Messablauf, wie er in einem Messgerät 100 stattfinden kann.

Wird im Schritt 602 festgestellt, dass die Zeitspanne bis zur Durchführung einer wiederholten Messung noch nicht abgelaufen ist, wird in Folge im Schritt 613 überprüft, ob externe Energie über die Antenne 381 eingespeist wird. Ist dies der Fall, so wird im Schritt 614 der Prozessor 450 mit Energie versorgt und initialisiert und/oder gebootet. Im Schritt 615 wird vom Prozessor zunächst überprüft, ob via die Schnittstelle 381 ein korrektes Zugangspasswort zur Aktivierung der Kommunikation übertragen wird. Ist dies der Fall und das Passwort korrekt, so aktiviert der Prozessor im Schritt 617 die sekundäre Kommunikationseinrichtung, beispielsweise einen Bluetooth-Chip 390. Im Schritt 618 interagiert der Benutzer mit Hilfe des externen Lesegerätes 480, beispielsweise eines Smartphones 480, über die sekundäre Kommunikationseinrichtung mit dem Messgerät 100. Im Schritt 619 wird überprüft, ob der Benutzer ein Ende der Kommunikation angefordert hat, beispielsweise durch ein Schließen einer App auf dem Smartphone. Ist dies der Fall, so wird im Schritt 622 die sekundäre Kommunikationseinrichtung 390 unmittelbar deaktiviert, bevor im Schritt 623 auch der Prozessor durch geeignete Steuersignale via den steuerbaren Schalter 250 deaktiviert wird. Wird im Schritt 619 kein benutzerindiziertes Beenden der Kommunikation festgestellt, so wird im Schritt 620 überprüft, ob der Benutzer eine vorgebbare Zeitspanne der Inaktivität überschritten hat. Ist dies der Fall, so wird im Schritt 621 davon ausgegangen, dass ein reguläres Beenden der externen Bedieneinheit 480 verpasst wurde, woraufhin eine letzte Nachricht nach außen hin abgesetzt wird, dass der Sensor wieder in seinen Ruhezustand zurückfallen wird. Nach Deaktivierung 622 der sekundären Kommunikationseinrichtung und des Deaktivieren 623 des Prozessors endet das Verfahren im Endzustand 612.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

### Liste der Bezugszeichen

100 Messgerät, Anzeigegerät, Gerät
101 Gehäuse
102 Gehäusewandung
200 Energiespeicher
205, 207, 209, 215 Leitung
208 Anschluss
220 Energieregeleinheit
250 steuerbarer Schalter
251 Rückkopplungsleitung
255 Leitung, Versorgungsleitung
300 Steuereinheit
301 Zeitmanagementeinheit
305, 355, 365 Interface
350 drahtlose Kommunikationseinrichtung
357 Verbindung
360 Konsole
370 Cloud
375 Server
380 RFID-Einheit
381 RFID-Antenne, Spule
382 RFID-Schaltung
383 Speicher der RFID-Einheit
385,386 Leitung
390 sekundäre Kommunikationseinrichtung
400 Verbraucher
410 Messfrontend
420 Anzeigefrontend
450 Recheneinheit, Steuereinheit
452 Kommunikationsleitung
454 Speicher
455, 457 Interface
459 Kommunikationsleitung
480 externe Bedieneinheit
490 Bediengerät
500 Verfahren
501 .. 506 Schritt
600 Verfahren
601 Startzustand
602 .. 611, 613 .. 622 Schritt
612 Endzustand
623 Deaktivierung

## Patentansprüche

1. Messgerät oder Anzeigegerät (100), insbesondere Messvorrichtung oder Anzeigevorrichtung für eine Füllstand-, Durchfluss- oder Druck-Messung, aufweisend:
eine RFID-Einheit (380), wobei die RFID-Einheit (380) eingerichtet ist, auf ein externes Kommando von einem externen Kommunikationsgerät (480):
mit einem Speicher (454) Daten auszutauschen,
einen steuerbaren Schalter (250) ein- und auszuschalten, und/oder Energie an einen Energiespeicher (200) zu übertragen.

2. Messgerät oder Anzeigegerät (100) nach Anspruch 1,
wobei die RFID-Einheit (380) eine RFID-Antenne (381) und einen RFID-Schaltkreis (382) aufweist.

3. Messgerät oder Anzeigegerät (100) nach Anspruch 1 oder 2,
das Ein- und Ausschalten des steuerbaren Schalters (250) beinhaltet, den steuerbaren Schalter (250) permanent einzuschalten.

4. Messgerät oder Anzeigegerät (100) nach einem der vorhergehenden Ansprüche,
wobei das Messgerät oder Anzeigegerät (100) einen Energiespeicher (200) aufweist.

5. Messgerät oder Anzeigegerät (100) nach einem der vorhergehenden Ansprüche, weiterhin aufweisend:
eine Rechen- und Steuereinheit (450), die über den steuerbaren Schalter (250) mit dem Energiespeicher (200) verbunden ist, und mit dem Speicher (454) verbunden ist.

6. Messgerät oder Anzeigegerät (100) nach einem der vorhergehenden Ansprüche,
wobei die RFID-Einheit (380) eine Nahfeldkommunikationsverbindung verwendet.

7. Messgerät oder Anzeigegerät (100) nach einem der vorhergehenden Ansprüche,
wobei der Verbraucher (400) weiterhin eine Funkeinheit (350) aufweist, welche eingerichtet ist, Daten an einen Server (375) zu übertragen und/oder von dem Server (375) zu empfangen, und
wobei die Funkeinheit (350) Sender und/oder Empfänger beispielsweise eines Niedrigenergieweitverkehrnetzwerks ist.

8. Messgerät oder Anzeigegerät (100) nach einem der vorhergehenden Ansprüche,
wobei der Verbraucher (400) weiterhin eine Kommunikationseinrichtung (390) aufweist, welche eingerichtet ist, Daten an einen Server (375) zu übertragen und/oder von dem Server (375) zu empfangen.

9. Messgerät oder Anzeigegerät (100) nach Anspruch 8,
wobei die Kommunikationseinrichtung (390) ein Wireless Personal Area Network (WPAN), ein Wireless LAN (WLAN) oder

10. Messgerät oder Anzeigegerät (100) nach einem der vorangehenden Ansprüche, weiterhin aufweisend:
eine Konsole (360), die entweder über eine weitere Leitung (207) mit dem Energiespeicher (200) verbunden ist oder einen eigenen Energiespeicher aufweist, wobei die Konsole (360) eingerichtet ist, den steuerbaren Schalter (250), insbesondere mittels der Steuereinheit (300), ein- und auszuschalten.

11. Messgerät oder Anzeigegerät (100) nach einem der vorangehenden Ansprüche,
wobei die Steuereinheit (300) eine Zeitmanagementeinheit (301) beinhaltet, welche eingerichtet ist, den Schalter (250), mittels einer Zeitinformation, von der RFID-Einheit (380), von der Funkeinheit (350) und/oder von der Konsole (360), zu steuern, wobei die Zeitinformation ein Zeitpunkt, eine Zeitspanne und/oder ein Zeitraster ist.

12. Messgerät oder Anzeigegerät (100) nach einem der vorangehenden Ansprüche, weiterhin aufweisend:
eine Energieregeleinheit (220), die eingerichtet ist, den über den steuerbaren Schalter (250) verbundenen Verbraucher (400) mit geregeltem Strom zu versorgen und, bei mehr als einem Verbraucher (400), die Verbraucher (400) entweder zusammen oder selektiv ein- und auszuschalten.

13. Verfahren zum Betrieb eines Messgeräts oder Anzeigegeräts (100) nach einem der Ansprüche 1 bis 12, mit den Schritten:
- Empfangen eines externen Kommandos, von einem externen Kommunikationsgerät (480), mittels einer RFID-Einheit (380);
- Wenn der Sendeimpuls beinhaltet, Daten zu empfangen, übertragen der Daten von der RFID-Einheit (380) an einen Speicher (454) in dem Messgerät oder Anzeigegerät (100);
- Wenn der Sendeimpuls beinhaltet, Daten zu senden, übertragen der Daten von dem Speicher (454) an die RFID-Einheit (380);
- Wenn der Sendeimpuls beinhaltet, das Messgerät oder Anzeigegerät (100) ein- oder auszuschalten, ein- bzw. ausschalten des steuerbaren Schalters (250), mittels der RFID-Einheit (380) an und der Steuereinheit (300);
- Wenn der Sendeimpuls beinhaltet, einen Energiespeicher (200) des Geräts (100) zu laden, übertragen von Energie von der RFID-Einheit (380) an den Energiespeicher (200).

14. Programmelement, welches, wenn es auf einer Rechen- und Steuereinheit (450) eines Messgeräts oder Anzeigegeräts (100) ausgeführt wird, geeignet ist, das Verfahren nach Anspruch 13 durchzuführen.

15. Computerlesbares Medium, auf dem ein Programmelement nach Anspruch 14 gespeichert ist.

## Geänderte Patentansprüche

### Geänderte Patentansprüche gemäss Regel 137(2) EPÜ.

1. Messgerät oder Anzeigegerät (100), insbesondere Messvorrichtung oder Anzeigevorrichtung für eine Füllstand-, Durchfluss- oder Druck-Messung, aufweisend:
einen steuerbaren Schalter (250),
einen Energiespeicher (200), und
eine RFID-Einheit (380), wobei die RFID-Einheit (380) eingerichtet ist, auf ein externes Kommando von einem externen Kommunikationsgerät (480) folgende Schritte durchzuführen:
- Empfangen eines externen Kommandos, von dem externen Kommunikationsgerät (480), mittels der RFID-Einheit (380);
- Wenn der Sendeimpuls beinhaltet, Daten zu empfangen, übertragen der Daten von der RFID-Einheit (380) an einen Speicher (454) in dem Messgerät oder Anzeigegerät (100);
- Wenn der Sendeimpuls beinhaltet, Daten zu senden, übertragen der Daten von dem Speicher (454) an die RFID-Einheit (380);
- Wenn der Sendeimpuls beinhaltet, das Messgerät oder Anzeigegerät (100) ein- oder auszuschalten, ein- bzw. ausschalten des steuerbaren Schalters (250), mittels der RFID-Einheit (380) und der Steuereinheit (300); und
- Wenn der Sendeimpuls beinhaltet, einen Energiespeicher (200) des Geräts (100) zu laden, übertragen von Energie von der RFID-Einheit (380) an den Energiespeicher (200).

2. Messgerät oder Anzeigegerät (100) nach Anspruch 1,
wobei die RFID-Einheit (380) eine RFID-Antenne (381) und einen RFID-Schaltkreis (382) aufweist.

3. Messgerät oder Anzeigegerät (100) nach Anspruch 1 oder 2,
das Ein- und Ausschalten des steuerbaren Schalters (250) beinhaltet, den steuerbaren Schalter (250) permanent einzuschalten.

4. Messgerät oder Anzeigegerät (100) nach einem der vorhergehenden Ansprüche,
wobei das Übertragen der Daten zwischen der RFID-Einheit (380) und dem Speicher (454) ein Auslesen von Messdaten und/oder ein Eintragen von Parametrierdaten, Software-Updates und weitere Datenarten beinhaltet und wobei das Messgerät oder Anzeigegerät (100) dazu eingerichtet ist, das Übertragen der Daten sowohl bei eingeschaltetem als auch bei ausgeschaltetem Messgerät oder Anzeigegerät (100) durchzuführen.

5. Messgerät oder Anzeigegerät (100) nach einem der vorhergehenden Ansprüche, weiterhin aufweisend:
eine Rechen- und Steuereinheit (450), die über den steuerbaren Schalter (250) mit dem Energiespeicher (200) verbunden ist, und mit dem Speicher (454) verbunden ist.

6. Messgerät oder Anzeigegerät (100) nach einem der vorhergehenden Ansprüche,
wobei die RFID-Einheit (380) eine Nahfeldkommunikationsverbindung verwendet.

7. Messgerät oder Anzeigegerät (100) nach einem der vorhergehenden Ansprüche, weiterhin aufweisend einen Verbraucher (400),
wobei der Verbraucher (400) weiterhin eine Funkeinheit (350) aufweist, welche eingerichtet ist, Daten an einen Server (375) zu übertragen und/oder von dem Server (375) zu empfangen.

8. Messgerät oder Anzeigegerät (100) nach Anspruch 7,
wobei die Funkeinheit (350) Sender und/oder Empfänger eines Niedrigenergieweitverkehrnetzwerks ist.

9. Messgerät oder Anzeigegerät (100) nach Anspruch 8,
wobei die Kommunikationseinrichtung (390) dazu eingerichtet ist, mittels eines Wireless Personal Area Networks (WPAN), eines Wireless LANs (WLAN) oder einer Infrared Data Association (IrDA) zu kommunizieren.

10. Messgerät oder Anzeigegerät (100) nach einem der vorangehenden Ansprüche, weiterhin aufweisend:
eine Konsole (360), die entweder über eine weitere Leitung (207) mit dem Energiespeicher (200) verbunden ist oder einen eigenen Energiespeicher aufweist,
wobei die Konsole (360) eingerichtet ist, den steuerbaren Schalter (250), mittels der Steuereinheit (300), ein- und auszuschalten.

11. Messgerät oder Anzeigegerät (100) nach einem der vorangehenden Ansprüche,
wobei die Steuereinheit (300) eine Zeitmanagementeinheit (301) beinhaltet, welche eingerichtet ist, den Schalter (250), mittels einer Zeitinformation, von der RFID-Einheit (380), von der Funkeinheit (350) und/oder von der Konsole (360), zu steuern,
wobei die Zeitinformation ein Zeitpunkt, eine Zeitspanne und/oder ein Zeitraster ist.

12. Messgerät oder Anzeigegerät (100) nach einem der vorangehenden Ansprüche, weiterhin aufweisend:
eine Energieregeleinheit (220), die eingerichtet ist, den über den steuerbaren Schalter (250) verbundenen Verbraucher (400) mit geregeltem Strom zu versorgen und, bei mehr als einem Verbraucher (400), die Verbraucher (400) entweder zusammen oder selektiv ein- und auszuschalten.

13. Verfahren zum Betrieb eines Messgeräts oder Anzeigegeräts (100) nach einem der Ansprüche 1 bis 12, mit den Schritten:
- Empfangen eines externen Kommandos, von einem externen Kommunikationsgerät (480), mittels einer RFID-Einheit (380);
- Wenn der Sendeimpuls beinhaltet, Daten zu empfangen, übertragen der Daten von der RFID-Einheit (380) an einen Speicher (454) in dem Messgerät oder Anzeigegerät (100);
- Wenn der Sendeimpuls beinhaltet, Daten zu senden, übertragen der Daten von dem Speicher (454) an die RFID-Einheit (380);
- Wenn der Sendeimpuls beinhaltet, das Messgerät oder Anzeigegerät (100) ein- oder auszuschalten, ein- bzw. ausschalten des steuerbaren Schalters (250), mittels der RFID-Einheit (380) und der Steuereinheit (300); und
- Wenn der Sendeimpuls beinhaltet, einen Energiespeicher (200) des Geräts (100) zu laden, übertragen von Energie von der RFID-Einheit (380) an den Energiespeicher (200).

14. Programmelement, welches, wenn es auf einer Rechen- und Steuereinheit (450) eines Messgeräts oder Anzeigegeräts (100) ausgeführt wird, geeignet ist, das Verfahren nach Anspruch 13 durchzuführen.

15. Computerlesbares Medium, auf dem ein Programmelement nach Anspruch 14 gespeichert ist.
